# EUROPEAN PATENT SPECIFICATION

(11) **EP 4 369 938 B1**
(45) Date of publication and mention of the grant of the patent: **12.11.2025**
(21) Application number: 22737919.5
(22) Date of filing: 07.07.2022
(51) Int. Cl.: A23F 5/24, A23F 5/26, A23L 33/16, C02F 1/66, C02F 1/68

(54) **USING DESIGN WATER FOR PREPARING BEVERAGES, ESPECIALLY FOR MAKING COFFEE**
VERWENDUNG VON DESIGNWASSER ZUR ZUBEREITUNG VON GETRÄNKEN, INBESONDERE ZUR ZUBEREITUNG VON KAFFEE
UTILISATION DE L'EAU DE CONCEPTION POUR LA PRÉPARATION DE BOISSONS, EN PARTICULIER POUR LA PRÉPARATION DU CAFÉ

(30) Priority: 16.07.2021 EP 21186014
(43) Date of publication of application: 22.05.2024
(73) Proprietor: University of Copenhagen, 1165 Copenhagen K (DK); DesignWater ApS, 2970 Hørsholm (DK)
(72) Inventor: KJÆRGAARD, Henrik G., 2100 Copenhagen Ø (DK); LUCIANI, Kenneth, 2970 Hørsholm (DK); PORSBORG, Bent, 2970 Hørsholm (DK); KJÆRGAARD, Eva R., 2100 Copenhagen Ø (DK); MAROUN, Zeina, 2100 Copenhagen Ø (DK); BIRKE RUNE, Christina Josefine, 2100 Copenhagen Ø (DK)
(74) Representative: Høiberg P/S
(86) International application number: PCT/EP2022/068863
(87) International publication number: WO 2023/285267

(56) References cited:
- EP-A1- 3 181 521
- WO-A1-2020/164913
- WO-A2-2007/100599
- JP-B2- 4 566 096
- US-A- 4 153 556

## Description

### Technical field

The present invention relates to designed water for brewing of coffee. Specifically, the designed water of the invention can be used to prepare good-tasting coffee.

### Background

Coffee and other beverages prepared essentially by extraction of flavours from a solid into a liquid exists in a vast variety, each having a different aroma, sweetness, bitterness, body, and acidity compared to the others. Exemplary factors that contribute to the taste and quality of the final beverage product e.g., coffee are such as bean type, origin, roasting, extraction time, water temperature and water composition.

While much focus is generally put on the coffee beans in terms of origin, type and roasting, far less focus is generally put on the water used for the brewing of coffees, and most everyday coffee drinkers will simply use ordinary tap water, which is readily available and convenient. Needless to say that the elemental composition of tap water can hardly be expected as having been optimized for use in extraction of flavours from coffee beans and will often contain a varying amount of calcium (Ca²⁺), magnesium (Mg²⁺), bicarbonate (HCO₃⁻), and to a lesser extent iron (Fe^{2+/3+}) and sulfate (SO₄²⁻). In particular, the presence of calcium (Ca²⁺) and bicarbonate (HCO₃⁻), which over time causes build-up of scale and wear in coffee brewing machinery can be problematic for the coffee consumer.

To circumvent this, some consumers have opted for using pure demineralized water and add dry mixtures comprising a known amount of Ca²⁺ and Mg²⁺. Such water however has a relatively lower pH due to its low buffering capacity and its use is consequently also associated with increased wear in coffee brewing equipment due to the increased tendency for formation of rust.

Others have designed filtering systems for tap water which exchange any Ca²⁺ found therein for Mg²⁺, which is less prone to formation of scale.

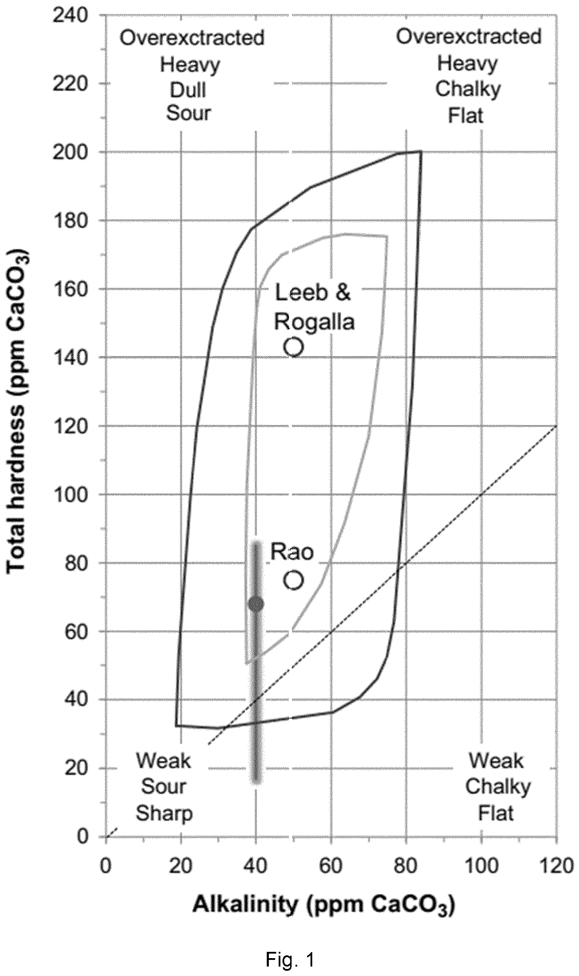

All of these solutions, however, build on the notion that in particular Ca²⁺ and Mg²⁺, being doubly-charged ions are of immense importance for extracting the negatively charged organic flavour molecules from coffee beans into solution, and are therefore considered a keystone in obtaining a good-tasting coffee brew. Based on such assumptions and observations, a generally accepted brew-zone is exemplified in references [1,2] and Figure 1. This acceptable brew-zone is directed for producing good tasting coffee, but causes scale build-up, which reduces consumer satisfaction.

WO 2020/164913 relates to palatable mineral water compositions with a pH between 7 and 9.5 comprising controlled amounts of calcium, magnesium and bicarbonate.

WO 2007/100599 relates to water compositions intended for brewing beverages such as tea and coffee, and discloses designed compositions demonstrating control of magnesium, calcium and carbonate, the water compositions having a TDS of 150 ppm, a calcium content between 25 and 39 ppm, and a bicarbonate content between 31.5 and 45.5 ppm.

EP 3181521 relates to remineralised water compositions comprising ions of calcium, magnesium and bicarbonate in a ratio of 1:1:4 and constituting at least 75% by weight of all ions in the remineralised water composition.

US 4,153,556 relates to an apparatus for conditioning demineralized brackish water or sea water to remove cabon dioxide and raise the pH to about 8 by spraying the water at low pressure against a conical surface to release the bulk of free carbon dioxide and subsequently feed the water through a bed of limestone chips to convert the balance of carbon dioxide into calcium bicarbonate.

There remains a need in the field for specialized brewing waters for coffee, capable of producing a good tasting coffee, without needing elements such as calcium and magnesium that are otherwise associated with scale build-up and equipment wear.

### Summary

The invention is defined by the claims. Any subject matter falling outside the scope of the claims is provided for information purposes only.

The present invention relates to the use of an optimized water composition specifically designed to improve the taste of coffee brewed with the water composition. Contrary to the accepted understanding in the available coffee literature, the water composition used within the present invention does not require large amounts of scale-inducing ions such as magnesium (Mg²⁺) or calcium (Ca²⁺) in order to produce a good tasting cup of coffee. This results in a more user- and equipment friendly process since there is a reduced degree of wear in the machinery.

The present inventors have surprisingly found that calcium and magnesium are far less important to the flavour of coffee than what had been assumed thus far, and is still assumed in the art today. While it is true that calcium and magnesium may play a part in the extraction of flavours from coffee beans into liquids, the way such flavours are perceived in taste is largely dependent on the resulting pH, which among other things controls the protonation of extracted flavours (organic molecules). To control the pH, a suitable buffer, such as bicarbonate (HCO₃⁻), may be applied. However, the notion that bicarbonate-containing compositions in the absence of any calcium or magnesium may be used for brewing good-tasting coffee, has never been pursued. The buffer may, however, also comprise other buffering agents, such as dihydrogen phosphate (H₂PO₄⁻ ) which can be used to further fine tune the pH.

The inventors have surprisingly found, that 1) coffee brewed on a combination of bicarbonate and calcium is indistinguishable from coffee brewed on demineralized water, and 2) in a consumer sampling, a statistically significant amount of people preferred coffee brewed on water containing only buffers and no added calcium and/or magnesium, to coffee brewed on demineralized water.

The invention is as defined in the claims. Any subject-matter falling outside the scope of the claims is provided for information purposes only.

One aspect of the present invention, is use of a composition, wherein the composition has a pH in the range of 7.5 to 7.8, and is further characterized by comprising:
a) a bicarbonate content in the range of 145 to 170 mg/L;
b) a content of each of calcium and magnesium of less than 25 mg/L; and
c) a dihydrogen phosphate content in the range of 30 to 80 mg/L,
for the preparation of a beverage.

Another aspect of the present invention, is a method for brewing coffee by extraction, the method comprising the steps of:
a) providing a demineralized water composition;
b) adding to the composition of a), two or more pH adjusters, wherein at least one of the two or more pH adjusters is also a source of bicarbonate, and wherein at least one other of the two or more pH adjusters is also a source of dihydrogen phosphate, so as to achieve a concentration of bicarbonate in the range of 145 to 170 mg/L, a concentration of dihydrogen phosphate content in the range of 30 to 80 mg/L and pH in the range of 7.5 to 7.8;
c) contacting ground coffee beans with the water composition of b) to perform an extraction; and
d) collecting the aqueous extract,
wherein the water composition of b) comprises less than 25 mg/L of each of calcium and magnesium.

### Description of Drawings

**Figure 1**: Visual representation of most preferred water compositions as generally accepted in the field. The figure also contains descriptors illustrating taste imbalances or off-notes that arise from suboptimal values for either total hardness or alkalinity. It is noted that the present invention concerns water compositions outside these preferred ranges. Reprint from [1].

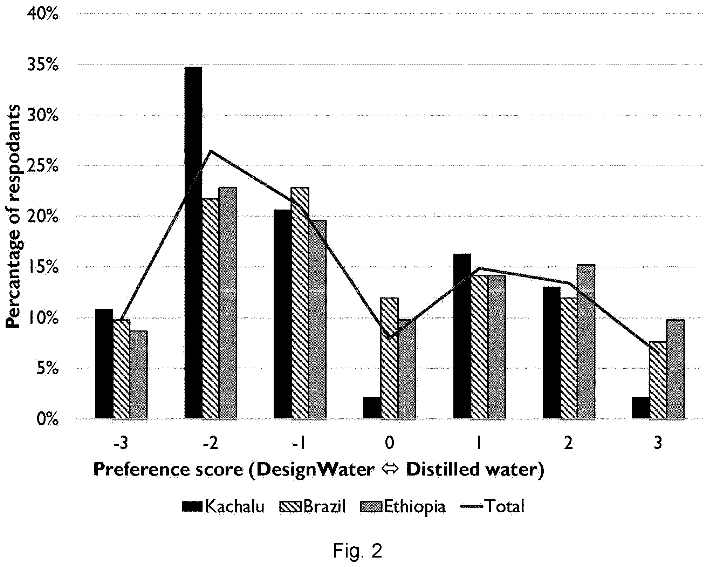

**Figure 2**: A visual representation of the preference scores of the respondents in a consumer test. The negative numbers indicate the degree of preference towards the DesignW sample, while the positive numbers indicate the degree of preference towards the DistW sample. See Table 6 for an overview of these scores. The number of respondents is 92 for each of the coffees and 276 in total (92*3).

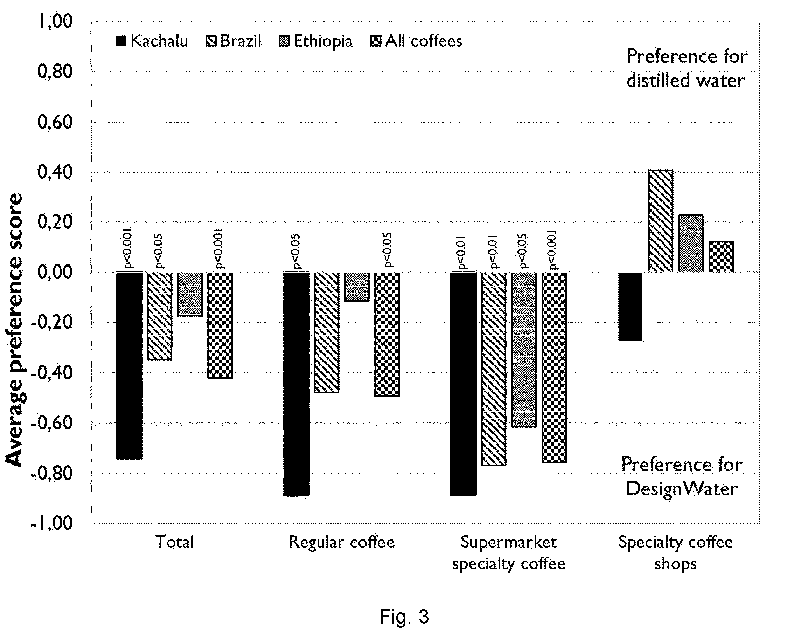

**Figure 3**: The average preference score of each coffee for each consumer group. If the average is >0 (top), there's a general tendency for preference for the DistW sample, if the average is <0 (bottom) there is a general tendency for preference for the DesignW sample. In the cases where the preference can be said to be statistically significant, the bar has been marked with a black border and the p-value has been indicated.

### Detailed description

The invention is defined by the claims. Any subject matter falling outside the scope of the claims is provided for information purposes only.

One embodiment of the present disclosure relates to an aqueous composition for preparing a beverage, wherein the composition has a pH in the range of 7.5 to 7.8, and is further characterized by comprising
a) a bicarbonate content in the range of 145 to 170 mg/L;
b) a content of each of calcium and/or magnesium of less than 25 mg/L; and
c) a dihydrogen phosphate content in the range of 30 to 80 mg/L.

The aqueous composition of the present dislcosure may comprise salts in any form suitable for the intended administration, including pharmaceutically (i.e. physiologically) acceptable salts. As used herein, the term "pharmaceutically acceptable salt" denotes any salt which may be considered non-toxic for consumption in the desired amount.

In one embodiment, the source of calcium, magnesium, dihydrogen phosphate, and bicarbonate as used herein may be in the form of pharmaceutically acceptable salts.

The aqueous composition of the present disclosure may be produced by combination of demineralized water and a fixed amount of additives. As used herein, the term "demineralized water" denotes ultrapure water, essentially free of minerals and other ions. It is further understood by the skilled person that in the field of the invention, demineralized water is understood as synonymous with distilled water, Milli-Q water, deionized water, reverse-osmosis water, forward-osmosis water and the like. Furthermore, these synonyms may be used interchangeably herein.

In one embodiment, the aqueous composition has a pH in the range of 7.2 to 9.0, such as 7.2 to 7.5, such as 7.5 to 7.8, such as 7.8 to 8.1, such as 8.1 to 8.4, such as 8.4 to 8.7, such as 8.7 to 9.0.

In one embodiment, the aqueous composition has a pH in the range of 7.5 to 7.8.

In one embodiment, the aqueous composition is obtained from demineralized water.

In one embodiment, the aqueous composition comprises or consists essentially of demineralized water.

In one embodiment, the aqueous composition has a bicarbonate content in the range 120 to 170 mg/L, such as 120 to 140 mg/L, such as 140 to 160 mg/L, such as 160 to 170 mg/L.

In one embodiment, the aqueous composition has a bicarbonate content in the range 140 to 160 mg/L, such as 160 to 170 mg/L.

In one embodiment, the source of bicarbonate is selected from the group consisting of carbon dioxide, carbonic acid, bicarbonate salts, and carbonate salts.

In one embodiment, the source of bicarbonate is a salt selected from the group consisting of sodium bicarbonate (NaHCO₃), potassium bicarbonate (KHCO₃), sodium carbonate (Na₂CO₃), potassium carbonate (K₂CO₃), or hydrates thereof.

In one embodiment, the source of bicarbonate is sodium bicarbonate (NaHCO₃) or a hydrate thereof.

The evaluation of what constitutes good-tasting coffee is to some extend subjective and may differ from country to country, and region to region. Consequently, additives, in the form of additional pH adjusters may be added to tune the pH of the aqueous composition and thereby tune the taste profile of the coffee brewed on such an aqueous composition.

In one embodiment, the aqueous composition may comprise two or more pH adjusters selected from the group consisting of carbonic acid, a carbonate salt, a bicarbonate salt, phosphoric acid, a phosphate salt, sodium hydroxide, hydrochloric acid, nitric acid, and an aqueous buffer.

In one embodiment, the aqueous composition comprises dihydrogen phosphate.

In one embodiment, the source of dihydrogen phosphate is selected from the group consisting of phosphoric acid, dihydrogen phosphate salts, hydrogen phosphate salts, and phosphate salts, or hydrates thereof.

In one embodiment, the source of dihydrogen phosphate is a salt selected from the group consisting of sodium dihydrogen phosphate (NaH₂PO₄), potassium dihydrogen phosphate (KH₂PO₄), sodium hydrogen phosphate (Na₃HPO₄), potassium hydrogen phosphate (K₂HPO₄), sodium phosphate (Na₃PO₄), and potassium phosphate (K₃PO₄), or hydrates thereof.

In one embodiment, the aqueous composition comprises dihydrogen phosphate in the range 30 to 80 mg/L.

In one embodiment, the aqueous composition comprises dihydrogen phosphate in the range 30 to 80 mg/L, such as 30 to 50 mg/L, such as 50 to 60 mg/L, such as 60 to 80 mg/L.

In one embodiment, the aqueous composition comprises dihydrogen phosphate in the range 50 to 60 mg/L.

The inventors have surprisingly found that calcium and magnesium plays little if any part on the tasting of brewed coffee, when bicarbonate is also present in the coffee. As such, the amount of magnesium and calcium in the brew water should be kept at an achievable minimum in order to reduce equipment maintenance and to increase equipment lifespan.

In one embodiment, the aqueous composition has a calcium content below 25 mg/L.

In one embodiment, the aqueous composition has a calcium content below 25 mg/L, such as below 20 mg/L, such as below 15 mg/L, such as below 10 mg/L, such as below 5 mg/L.

In one embodiment, the source of calcium is a pharmaceutically acceptable inorganic salt of calcium or a hydrate thereof.

In one embodiment, the aqueous composition has a magnesium content below 25 mg/L.

In one embodiment, the aqueous composition has a magnesium content below 25 mg/L, such as below 20 mg/L, such as below 15 mg/L, such as below 10 mg/L, such as below 5 mg/L.

In one embodiment, the source of magnesium is a pharmaceutically acceptable inorganic salt of calcium or a hydrate thereof.

In one embodiment, the aqueous compositions have a combined concentration of magnesium and calcium below 25 mg/L, such as below 20 mg/L, such as below 15 mg/L, such as below 10 mg/L, such as below 5 mg/L.

In one embodiment, the aqueous composition has a pH ranging from 7.5 to 7.8, comprising 165 (±5) mg/L bicarbonate, and 55 (±1) mg/L dihydrogen phosphate.

In one embodiment, the aqueous composition is for preparing a beverage, wherein the beverage is coffee.

Another embodiment of the present disclosure, is directed to a use of a composition, wherein the composition has a pH in the range of 7.5 to 7.8, and is further characterized by comprising
a) a bicarbonate content in the range of 145 to 170 mg/L;
b) a content of each of calcium and/or magnesium of less than 25 mg/L; and
c) a dihydrogen phosphate content in the range of 30 to 80 mg/L,
for the preparation of a beverage.

In one embodiment, the beverage is selected from coffee, or tea.

In one embodiment, the beverage is coffee.

In one embodiment, the beverage is a hot beverage.

In one embodiment, the beverage is prepared via an extraction process.

In one embodiment, the extraction process is performed in a coffee brewing apparatus.

In one embodiment, the coffee brewing apparatus is selected from the group consisting of French press, aeropress, espresso machine, drip coffee machine, single serve pod coffee machine, or any other apparatus for brewing coffee.

In one embodiment, the coffee brewing apparatus is French press.

Another embodiment of the present disclosure, is directed to a kit comprising a dry mixture to be dissolved in a fixed amount of demineralized water, so as to obtain an aqueous composition, wherein the composition has a pH in the range of 7.5 to 7.8, and is further characterized by comprising
a) a bicarbonate content in the range of 145 to 170 mg/L;
b) a content of each of calcium and/or magnesium of less than 25 mg/L; and
c) a dihydrogen phosphate content in the range from 30 to 80 mg/L.

In one embodiment, the dry mixture comprises a source of bicarbonate selected from the group consisting of sodium bicarbonate (NaHCO₃), potassium bicarbonate (KHCO₃), sodium carbonate (Na₂CO₃), potassium carbonate (K₂CO₃), or hydrates thereof.

In one embodiment, the dry mixture comprises a source of dihydrogen phosphate selected from the group consisting of sodium dihydrogen phosphate (NaH₂PO₄), potassium dihydrogen phosphate (KH₂PO₄), sodium hydrogen phosphate (Na₂HPO₄), potassium hydrogen phosphate (K₂HPO₄), sodium phosphate (Na₃PO₄), and potassium phosphate (K₃PO₄), or hydrates thereof.

In one embodiment, the dry mixture comprises a source of calcium as a pharmaceutically acceptable inorganic salt of calcium or a hydrate thereof, and a source of magnesium as a pharmaceutically acceptable inorganic salt of magnesium or a hydrate thereof.

Another embodiment of the present disclosure, is directed to a method for brewing coffee by extraction, the method comprising the steps of:
a) providing a demineralized water composition;
b) adding to the composition of a), two or more pH adjusters, wherein at least one of the two or more pH adjusters is also a source of bicarbonate, and wherein at least one other of the two or more pH adjusters is also a source of dihydrogen phosphate, so as to achieve a concentration of bicarbonate in the range of 145 to 170 mg/L, a concentration of dihydrogen phosphate content in the range of 30 to 80 mg/L and pH in the range of 7.5 to 7.8;
c) contacting ground coffee beans with the water composition of b) to perform an extraction; and
d) collecting the aqueous extract,
wherein the water composition of b) comprises less than 25 mg/L of each of calcium and/or magnesium.

In one embodiment, the two or more pH adjusters is selected from the group consisting of carbonic acid, a carbonate salt, a bicarbonate salt, phosphoric acid, a phosphate salt, sodium hydroxide, hydrochloric acid, nitric acid, and an aqueous buffer.

In one embodiment, the source of bicarbonate in step b) of the method is selected from the group consisting of carbon dioxide, carbonic acid, bicarbonate salts, and carbonate salts.

In one embodiment, the source of bicarbonate in step b) of the method is selected from the group consisting of sodium bicarbonate (NaHCO₃), potassium bicarbonate (KHCO₃), sodium carbonate (Na₂CO₃), potassium carbonate (K₂CO₃), or hydrates thereof.

In one embodiment, the method comprises addition of a source of dihydrogen phosphate in step b) so as to achieve a concentration of dihydrogen phosphate in the range of 30 to 80 mg/L, such as 30 to 50 mg/L, such as 50 to 60 mg/L, such as 60 to 80 mg/L.

In one embodiment, the method comprises a source of dihydrogen phosphate selected from the group consisting of phosphoric acid, sodium dihydrogen phosphate (NaH₂PO₄), potassium dihydrogen phosphate (KH₂PO₄), sodium hydrogen phosphate (Na₂HPO₄), potassium hydrogen phosphate (K₂HPO₄), sodium phosphate (Na₃PO₄), and potassium phosphate (K₃PO₄), or hydrates thereof.

In one embodiment, the method comprises demineralised water provided by any one of reverse osmosis water, forward osmosis water, distilled water, Milli-Q water, ultrapure water, deionized water, filtered tap water or a combination thereof.

In one embodiment, the pH obtained in step b) of the method is in the range of 7.2 to 9.0, such as 7.2 to 7.5, such as 7.5 to 7.8, such as 7.8 to 8.1, such as 8.1 to 8.4, such as 8.4 to 8.7, such as 8.7 to 9.0 .

In one embodiment, the pH obtained in step b) of the method is in the range of 7.5 to 7.8.

In one embodiment, the ground coffee beans are roasted prior to grinding.

In one embodiment, the method comprises use of a coffee brewing apparatus in step c), selected from the group consisting of French press, aeropress, espresso machine, apparatus for cold brew, drip coffee machine, single serve pod coffee machine, and any other apparatus for brewing coffee.

In one embodiment, the coffee brewing apparatus in step c) is French press.

In one embodiment, the coffee brewing apparatus in step c) is an apparatus for cold brew.

In one embodiment, the coffee brewing apparatus in step c) is an espresso machine. Factors such as the extraction time, the extraction temperature, and the ratio of ground beans to aqueous composition is largely dependent on the specific type of coffee being brewed with the aqueous composition.

In one embodiment, the ratio of ground beans to aqueous composition ranges from 1:1 to 1:25 by weight, such as from 1:1 to 1:2 by weight, such as from 1:2 to 1:4 by weight, such as from 1:4 to 1:10 by weight, such as from 1:10 to 1:25 by weight, such as from 1:10 to 1:15 by weight, such as from 1:15 to 1:20 by weight, such as from 1:20 to 1:25 by weight.

In one embodiment, the ratio of ground beans to aqueous composition ranges from 1:15 to 1:20 by weight.

In one embodiment, the extraction in step c) is performed in the range of 10 seconds to 24 hours.

In one embodiment related to cold brewing of coffee, the aqueous composition of the present disclosure may be at any temperature between 5°C and 98°C when contacted with ground coffee beans, followed by an extraction time of more than 2 hours, such as 4 hours, such as 12 hours, such as 24 hours.

In one embodiment, the temperature of the water composition is between 5°C and 98°C when starting the extraction in step c).

In another embodiment related to brewing of espresso, the aqueous composition of the present disclosure may be at any temperature between 90°C and 98°C when contacted with ground coffee beans, followed by an extraction time of more than 10 seconds, such as 20 seconds, such as 22 seconds, such as 24 seconds, such as 26 seconds, such as 28 seconds, such as 30 seconds, such as 40 seconds.

In one embodiment, the temperature of the water composition is between 90°C and 98°C when starting the extraction in step c).

In another embodiment related to brewing of French press coffee, the aqueous composition of the present disclosure may be at any temperature between 90°C and 98°C when contacted with ground coffee beans, followed by an extraction time of more than 2 minutes.

In one embodiment, the temperature of the water composition is 92°C (±2°C) when staring the extraction in step c).

In one embodiment, the extraction in step c) is performed in the range of 2 to 6 minutes.

In one embodiment, the extraction in step c) is performed in the range of 2 to 6 minutes, such as in the range of 3 to 5 minutes, such as in the range of 3.5 to 4.5 minutes.

In one embodiment, the temperature of the collected aqueous extract in step d) is 70°C (±5°C).

In one embodiment, a beverage obtained by the method herein is for human consumption.

In one embodiment, the beverage has a temperature between 55°C and 45°C when consumed.

### Examples

### Example 1: Duo-trio testing of coffee brewed on water with varying magnesium, calcium, bicarbonate and pH levels against coffee brewed on demineralized water

Duo-trio tests were performed on 6 series of coffee brewed with water with varying levels of magnesium, bicarbonate, pH, calcium and bicarbonate and tested against demineralized water (Milli-Q).

The objective of the discriminative tests was to determine at which level of magnesium, bicarbonate, pH, calcium and combinations thereof the flavour of coffee is found to be different from coffee brewed on demineralized water.

### Materials and methods

### Salts

The levels of ions chosen to test were determined based on safety/ethical considerations. To ensure that the salts used herein are safe for ingestion, all salts were purchased in either Ph. Eur., API Ph. Eur. or food grade.

The amounts of salts that have been used in the solutions have all been kept well below the recommended daily amounts by the Danish Food administration.

### Water

For all water solutions, Milli-Q water from a dispenser located at the Department of food science (University of Copenhagen) in the ingredients and dairy technology laboratory was used. A bacterial test of this water at the microbiology lab showed that the raw water contained 5 colonies at 30 °C and none at 37 °C, which is less than what is found in normal drinking water. The boiled water was also tested and no colonies were found at any temperature.

The maximum pH measured in the tested water was ~9.0. This pH is higher than the maximum pH allowed of 8.5 in Danish drinking water. However, according to WHO, there is no indication that higher pH than 8.5 is harmful to human health (https://www.who.int/water_sanitation_health/dwq/chemicals/ph.pdf). Moreover, the resulting coffee brewed on water with pH~9.0 was measured to be approximately 4.9.

### Preparation of test solutions

Test solutions (found in Table 1) were prepared by making a concentrated stock solution of each salt used (a mix of CaSO₄ and CaCl₂ for calcium, MgSO₄ for magnesium, NaHCO₃ for bicarbonate and NaOH for the pH samples). The needed amount of stock was subsequently mixed with Milli-Q in order to have the final solution. For the pH samples, a 0.1 M NaOH solution was used as stock solution.

**Table 1 - Water test solutions for Duo-trio test of coffee brewed on water with varying ions against coffee brewed on Milli-Q water.**

| Water Test Solution | **Level 1** | **Level 2** | **Level 3** | **Level 4** | **Level 5** |
|---|---|---|---|---|---|
| **1:** Mg²⁺ | 5 mg/L | 10 mg/L | 20 mg/L | 40 mg/L | 80 mg/L |
| **2:** HCO₃⁻ | 15 mg/L | 30 mg/L | 60 mg/L | 120 mg/L | 240 mg/L |
| **3:** pH | ~7.0 | ~7.5 | ~8.0 | ~8.5 | ~9.0 |
| **4:** Ca²⁺ | 15 mg/L | 30 mg/L | 60 mg/L | 120 mg/L | 240 mg/L |
| **5:** Ca²⁺ (+HCO₃⁻fixed at 60 mg/L) | 15 mg/L | 30 mg/L | 60 mg/L | 120 mg/L | 240 mg/L |

### Preparation of coffee samples

The coffee (Columbian Kachalu - all coffee roasted in the same batch) needed for the entire day was grinded at the same time first thing in the morning. Afterwards a brewing plan started - brewing from the coffee that would be served first to the last. The sets of Milli-Q and Water test solution that were to be served at the same time were also brewed at the same time. The coffee was brewed using French press. The procedure was as follows:
- Two kettles of water, one with Milli-Q and one with Water Test Solution, were set to boil at the same time. Exactly one minute after the water had boiled, the kettles were given to the two coffee brewers. The one minute was based on having measured that 1 minute after brewing, the water had reached 92 °C.
- The two brewers simultaneously poured 900 mg of water over 50 g of grinded coffee. After 3.5 minutes they stirred 10 times and removed the foam. At exactly four minutes, the press was pushed down.
- The coffee was instantly poured into a beaker to avoid post-extraction. A lid was put on to minimize loss of aroma compounds and the beakers were put in a refrigerator to cool until the samples were ready to be poured in solo cups.
- After all the coffee had been brewed, the coffee was poured into solo cups and immediately covered by a lid.

### Duo-trio testing

In Duo-trio testing, the null hypothesis is that there is no difference between the samples. This means that this assertion is held unless there is overwhelming evidence, based on empirical data, that the null hypothesis is incorrect [3].

The p-value (*p*) is the probability of observing an outcome that is more extreme than or equal to the test statistic observed assuming that the null hypothesis is true. In other words, it is the likelihood that the test is incorrectly rejecting the null hypothesis. Incorrectly rejecting a true null hypothesis is called a *Type I error.* When performing a discriminative test to find a difference between the samples (as opposed to a similarity), this is the most significant error. This is because a Type I error would result in a conclusion that two samples are different when they are in fact not. A *Type II error* occurs when a false null hypothesis is not rejected. That would in our case mean that two samples are concluded to be similar when they are in fact different. Since we are looking for significant differences between our samples, this type of error is not as critical as Type I.

To control the proportion of decisions in which a Type I error is made, a predetermined level, the significance level (α), can be set. A typical level, also used in our case, is α=0.05, which implies that when the null hypothesis is true, then we correctly decide in favour of the null hypothesis 19 out of 20 times. The null hypothesis is rejected in favour of the alternative hypothesis only if the p-value is less than or equal to α. Since we have set α to 0.05, this means that for any of the duo-trio tests where we get a p-value below 0.05, we conclude that there is no difference between the samples.

For the performed experiments, the α-risk is set at 5% significance level.

### Test protocol

### Assessors:

The number of panellists participating in the tests were between 20 and 30.

The number of panellists were at least the recommended minimum number of assessors as stated in ASTM E2610-08 (2011), Standard Test Method for Duo-Trio.

### Training session:

The panellists were presented to the two most different samples, brewed on demineralized water (DistW) and on the highest level of bicarbonate (Water Test Solution 2, Level 5) before the duo-trio testing and were trained in:
- Assessing the samples in the correct order
- Palate cleansing between each set
- Assessing the right quantity of each sample using the sip and spit method

### Presentation:

A reference sample followed by two 3 digit-coded samples was presented to each assessor. Half of the assessors will be presented with sample A (DistW) first and the other half was presented with Sample B (5 levels of Water Test Solution respectively) first. The serving order was randomized between panellists.

Each assessor was presented with 20 mL of each sample at room temperature in small plastic cups (30 ml solo cups). They were asked to take a sip of each sample from left to right and make a decision on which sample matches the reference sample.

Pure demineralized water (Milli-Q) will be used as palate cleanser.

### Balanced-reference technique:

In order to avoid that the panellists learn to recognize coffee brewed on Milli-Q and distinguish on that account, the duo-trio sets were randomized across each series, for each assessor, and the serving order was randomized between panellists. The reference sample was changed for each of the series, and furthermore the reference was changed between Milli-Q and Level X between 3 sets of 5.

After serving of 5 sets, the panellists were given ~10 minutes break where melon and tap water was served for them and they were asked to leave the testing room.

The panellists were in advance instructed to fill out a questionnaire, indicating which sample is identical to the reference. In case where the panellists were not able to distinguish, they had to guess.

### Results

In Table 2 below, the results from the experiments are shown by indicating how many panellists were correctly able to identify the sample that was not a match and in which experiments, this number corresponds to a significant p-value. The p-values were determined based on a look-up table [4].

In general, it is seen that the samples are difficult to distinguish.

**Table 2 - Results from duo-trio test**

| **Mg²⁺ (mg/L)** | **5** | **10** | **20** | **40** | **80** |
|---|---|---|---|---|---|
| Correct answers (correct / total) | 12 / 31 | 12 / 30 | 14 / 30 | 7 / 30 | 14 / 31 |
| Significant p-value | - | - | - | - | - |

| **HCO₃**⁻ **(mg/L)** | **15** | **30** | **60** | **120** | **240** |
|---|---|---|---|---|---|
| Correct answers (correct / total) | 16 / 31 | 14 / 31 | 13 / 31 | 20 / 30 | 24 / 31 |
| Significant p-value | - | - | - | <0.05 | <0.001 |

| **pH** | **~7.0** | **~7.5** | **~8.0** | **~8.5** | **~9.0** |
|---|---|---|---|---|---|
| Correct answers (correct / total) | 16 / 25 | 9 / 25 | 12 / 25 | 13 / 25 | 13 / 25 |
| Significant p-value | - | - | - | - | - |

| **Ca²⁺ (mg/L)** | **15** | **30** | **60** | **120** | **240** |
|---|---|---|---|---|---|
| Correct answers (correct / total) | 18 / 25 | 11 / 24 | 9 / 25 | 16 / 25 | 17 / 25 |
| Significant p-value | <0.05 | - | - | - | <0.05 |

| **Ca²⁺ (mg/L) + 60 mg/L HCO₃⁻** | **15** | **30** | **60** | **120** | **240** |
|---|---|---|---|---|---|
| Correct answers (correct / total) | 13 / 25 | 8 / 25 | 13 / 25 | 10 / 25 | 12 / 25 |
| Significant p-value | - | - | - | - | - |

For the Mg²⁺ and pH series, there was no significant p-value at any level.

Samples brewed on calcium-containing brew water was detectable at the lowest and highest level to a significant level, and similarly bicarbonate-containing brew water was detectable at the highest levels. Interestingly, coffee brewed on water containing both calcium and bicarbonate was not detectable in comparison with coffee brewed on demineralized water.

### Conclusions

Duo-trio tests were performed on five series of coffee brewed with water with varying levels of magnesium, bicarbonate, pH, calcium, and calcium and bicarbonate in combination and tested against coffee brewed on demineralized water. The data shows, that the most statistically significant difference can be observed at the highest level of bicarbonate. Furthermore the data show, that high levels of calcium are detectable. Interestingly, calcium was not distinguishable at any concentration once combined with 60 mg/L of bicarbonate. To summarize further, coffee brewed on water containing bicarbonate and no other additive is identified as tasting significantly different from coffee brewed on demineralized water, if the bicarbonate concentration used was between 120 to 240 mg/L.

### Example 2: Consumer preference test

In this example, the results from a hedonic evaluation by consumers of three different coffees brewed on two different water types is presented. The two water types were demineralized water (Milli-Q) and demineralized water with added buffer (165 mg/L bicarbonate and 55 mg/L dihydrogen phosphate).

### Materials and methods

### Consumers and facilities

The consumers (n=92) were recruited from the consumer database from the University of Copenhagen, from different coffee groups on Facebook as well as other non-expert consumers. The consumers were all regular coffee drinkers (drinking coffee on a regular basis).

The evaluations were performed in the sensory booths at the SenseLab at University of Copenhagen. Prior to tasting sessions (15 in total), the consumers were told how to taste the coffee samples and how to evaluate, in order to minimize confusion and streamline their process as much as possible. The consumers were only told that they would be tasting coffee, but nothing about the differences of the samples.

### Samples and sample preparation

### Preparation of water solutions:

The test was run on two water samples:
- Demineralized water (DistW) which is pure Milli-Q water.
- DesignWater (DesignW) which is Milli-Q water added 165 mg/L bicarbonate and 55 mg/L dihydrogen phosphate.

The water samples were prepared from stock-solutions of respectively sodium bicarbonate and sodium dihydrogen phosphate.

### Preparation of coffee samples

All samples were brewed on the coffees presented in Table 3.

All three coffees have been defined as specialty coffees based on them being sold as whole beans and not being part of a regular coffee assortment in supermarkets.

The mid- and high-end categorization is based the price (Peter Larsen costs
209 DKK/kg while the Kontra coffees cost 312 DKK/kg) and the roast degree (higher-end coffee typically have lower roasting degree).

**Table 3 - An overview of the characteristics of the coffees used for the consumer test.**

| **Coffee** | **Colombia Kachalu (KAT)** | **Brazil Daterra (BRA)** | **Ethiopia Nensebo (ETI)** |
|---|---|---|---|
| Roaster | Peter Larsen | Kontra | Kontra |
| Category | Mid-end specialty coffee | High-end specialty coffee | High-end specialty coffee |
| Roasting profile | Medium | Light | Light |
| Roasting date | 09-06-2020 | 22-06-2020 | 22-06-2020 |
| Process | Not stated | Pulped natural | Natural |
| | Very aromatic, sweet, lightly fruity coffee with a rounded taste of apples and caramel. Notes of chocolate with almonds. | | |
| Aroma profile (description on the product) | | Full-bodied with notes of milk chocolate, almond and a hint of red berries | Very sweet and layered coffee. Fresh acidity. Chardonnay like with notes of tropical fruit. |

The coffee was ground to a slightly coarse particle size in a Wilfa WSCG+2 Coffee Grinder. Grinding was performed less than one hour prior to brewing to ensure freshness.

### Brewing procedure

The coffee samples were brewed in French press brewers to ensure consistency (Bodum Chambord French Press, coffee maker). The coffee was brewed less than an hour before serving.

The brewing procedure was as follows:
- A kettle with the water sample was set to boil. Exactly 1 minute after the water had boiled, the water was poured over the coffee, starting the brewing process. After 1 minute, the temperature of the water had reached 92 °C
- The water (900 g) was poured over the coffee (50 g). After 3.5 minutes, the mixture was stirred 10 times with a spoon, and the foam removed. After exactly 4 minutes, the press was pushed down.
- Immediately after, the coffee was poured into a thermo kettle to avoid post-extraction and to keep the temperature at 70 °C.

### pH of coffee

Each coffee was brewed 16 times. In order to test the consistency of the coffee servings, samples of all water and coffee produced were analysed. Results of the analysis showed, that the pH value of the prepared DesignWater (DesignW) samples used for brewing varied between 7.59 and 7.72. The lowest and highest pH values measured in coffee brewed within these 16 samples as well as the average of all 16 are presented in Table 4.

**Table 4 - The average pH values of the coffees served at the consumer test**

| **Coffee** | | **Min** | **Max** | **Average** |
|---|---|---|---|---|
| **Colombia Kachalu** | DistW | 4.67 | 4.72 | 4.70 ± 0.02 |
| | DesignW | 4.92 | 5.01 | 4.96 ± 0.03 |
| | Difference | - | - | 0.27 |
| **Brazil Daterra** | DistW | 4.74 | 4.79 | 4.77 ± 0.02 |
| | DesignW | 5.00 | 5.07 | 5.03 ± 0.02 |
| | Difference | - | - | 0.26 |
| **Ethiopia Nensebo** | DistW | 4.62 | 4.70 | 4.64 ± 0.02 |
| | DesignW | 4.89 | 4.99 | 4.92 ± 0.03 |
| | Difference | - | - | 0.28 |

### Tasting and evaluation

The coffee samples were presented to the consumers in three sets with two coffee samples on a tray at a time. The two coffee samples were brewed with the same coffee bean and the only difference was the water.

The coffees were served as a three-sip sample in white (1 dl) paper cup. In the test, DistW and DesignWater (DesignW) were masked with three-digit numbers. The coffees were served in the same order within each of the 15 sessions; however, were changed between sessions so that each of six possible orders were represented at least twice. The serving order of the first tasted water was completely random for all consumers in all three sets. The coffees were served in intervals of ten minutes and at a serving temperature of 55 (±1) °C.

The coffee samples were evaluated using a rated degree of preference test [5], where the consumers not only chose the most preferred coffee but also have to determine to which degree they prefer one of the coffees to the other.

In order to be able to deal with the rated degree of preference quantitatively, the scores of each consumer were translated into the values presented in Table 5 upon data collection:

**Table 5 - Overview of the quantitatively translated preference scores of the consumers.**

| **Degree of preference stated in test** | **Translated score** |
|---|---|
| Prefer DistW a lot to DesignW | 3 |
| Prefer DistW to DesignW | 2 |
| Prefer DistW a little DesignW | 1 |
| No preference | 0 |
| Prefer DesignW a little to DistW | -1 |
| Prefer DesignW to DistW | -2 |
| Prefer DesignW a lot to DistW | -3 |

Negative numbers indicate the degree of preference towards DesignW while positive numbers indicate the degree of preference towards DistW.

### Results

### Tasting

Results from the consumer preference test are presented in respectively Table 6 and Figure 2.

In Table 6, a general preference towards coffee brewed on DesignW is observed, with more than 50% of the consumers preferring DesignW in all cases.

**Table 6 - The number of respondents at each score for each coffee as well as totally. KAT, BRA and ETI represent the three different types of coffee tested.**

| | KAT (n=92) | BRA (n=92) | ETI (n=92) | TOTAL (n=276) |
|---|---|---|---|---|
| **P-value** | **<0.001** | **<0.05** | **NS** | **<0.001** |
| Strongly prefer DesignW | 10 (11%) | 9 (10%) | 8 (9%) | 27 (10%) |
| Prefer DesignW | 32 (35%) | 20 (22%) | 21 (23%) | 73 (26%) |
| Slightly prefer DesignW | 19 (21%) | 21 (23%) | 18 (20%) | 58 (21%) |
| No preference | 2 (2%) | 11 (12%) | 9 (9%) | 2 (28%) |
| Slightly prefer DistilledW | 15 (16%) | 13 (14%) | 13 (14%) | 41 (15%) |
| Prefer DistilledW | 12 (13%) | 11 (12%) | 14 (15%) | 37 (13%) |
| Strongly prefer DistilledW | 2 (2%) | 7 (8%) | 9 (10%) | 18 (7%) |
| Total prefer DesignW | 61 (66%) | 50 (54%) | 47 (51%) | 158 (57%) |
| No preference | 2 (2%) | 11 (12%) | 9 (10%) | 22 (8%) |
| Total prefer DistilledW | 29 (32%) | 31 (34%) | 36 (39%) | 96 (35%) |

A visual representation of the preference scores of the respondents is shown in Figure 2, where the negative numbers indicate the degree of preference towards DesignW while the positive numbers indicate the degree of preference towards DistW.

The test showed that the consumers had an overall preference for the coffee brewed on water with a buffer capacity (called DesignWater) with an overall statistical significance of p<0.001 and with 57% of the 92 consumers stating a preference towards it.

For the individual coffees, a significant preference for coffee brewed on DesignWater was observed for Colombian Kachalu (p<0.001), and for Brazil Daterra (p<0.05). For Ethiopian Nensebo coffee a slight majority (51%) prefer DesignWater.

The results indicate, that a preference for coffee brewed on DesignWater is especially prevalent when brewed with mid-end coffee (Columbia Kachalu), as opposed to high-end coffees. Moreover, it was found that consumers who buy their coffee in supermarkets (regular or specialty) have a higher preference towards DesignWater compared to consumers who buy their coffee at specialty shops/roasters (see Table 8 below).

### Socio demographics

Of the 92 consumers participating in the hedonic evaluation, there were 54 males, and 37 females. They were all between the ages of 21 - 73, with a mean age of 39.4 years. The socio demographic distribution of the participating consumers can be found in Table 7 below.

**Table 7 - The socio demographic distribution of the participating consumers. The total mean score is based on all three coffees.**

| | **n= 92 (%)** | **TOTAL mean score** |
|---|---|---|
| **Sex** | | |
| **Male** | 54 (59%) | -0.3 |
| **Female** | 37 (39%) | -0.5 |
| **No response** | 1 (1%) | - |

| **Age** | | |
|---|---|---|
| **21-29** | 30 (33%) | -0.3 |
| **30-49** | 39 (42%) | -0.4 |
| **50+** | 23 (25%) | -0.7 |

| **Education** | | |
|---|---|---|
| **Primary Education** | 1 (1%) | -1.0 |
| **Secondary Education** | 21 (23%) | -0.6 |
| **B.Sc.** | 28 (30%) | -0.5 |
| **M.Sc. or higher** | 38 (41%) | -0.3 |
| **Other** | 4 (4%) | -0.5 |

The data clearly shows, that coffee brewed with DesignWater is preferred by all consumers irrespective of sex, age and education of the consumer.

### Consumer groups

In Table 8, data for different consumer groups' preferences within each coffee are presented. In Figure 3, the average preference score is shown for each group.

The data show, that for consumers buying their coffee in Supermarkets, there is an overall statistically significant preference for coffee brewed on DesignWater, whereas the consumers buying their coffee in Specialty coffee shops have no significant preference for either.

**Table 8 - Overview of the preference distribution within each customer group. Note that TOTAL is 3*n, n being different for each group.**

| | **KAT (n)** | **BRA (n)** | **ETI (n)** | **TOTAL (3*n)** |
|---|---|---|---|---|
| **Local supermarket - regular coffee (n=44, 48%)** | | | | |
| P-value | <0.05 | NS | NS | <0.05 |
| Total prefer DesignW | 30 (68%) | 24 (55%) | 21 (48%) | 75 (57%) |
| No preference | 0 (0%) | 5 (11%) | 5 (11%) | 10 (8%) |
| Total prefer DistilledW | 14 (32%) | 15 (34%) | 18 (41%) | 47 (36%) |

| **Supermarket - specialty coffee (n=26, 28%)** | | | | |
|---|---|---|---|---|
| P-value | <0.01 | <0.01 | <0.05 | <0.001 |
| Total prefer DesignW | 20 (77%) | 17 (65%) | 17 (65%) | 54 (69%) |
| No preference | 1 (4%) | 5 (19%) | 2 (8%) | 8 (10%) |
| Total prefer DistilledW | 5 (19%) | 4 (15%) | 7 (27%) | 16 (21%) |

| **Specialty coffee shops or roasters (n=22, 24%)** | | | | |
|---|---|---|---|---|
| P-value | NS | NS | NS | NS |
| Total prefer DesignW | 11 (50%) | 9 (41%) | 9 (41%) | 29 (44%) |
| No preference | 1 (5%) | 1 (5%) | 2 (9%) | 4 (6%) |
| Total prefer DistilledW | 10 (45%) | 12 (55%) | 11 (50%) | 33 (50%) |

Data show, that there is a tendency, that people buying there coffee from local supermarkets (not specialty coffee shops), have stronger preference for DesignWater.

### Conclusions

The test showed that the consumers had an overall preference for the coffee brewed on water with a buffer capacity (called DesignWater) with an overall statistical significance of p<0.001 and with 57% of the 92 consumers stating a preference towards it.

It was found that the preference for DesignWater was especially prevalent when brewed with mid-end coffee (Columbia Kachalu), as opposed to high-end coffees, with 66% of consumers preferring DesignWater in this case. Moreover, it was found that consumers who buy their coffee in supermarkets (regular or specialty) have a higher preference towards DesignWater compared to consumers who buy their coffee at specialty shops/roasters.

This consumer test has shown that it is definitely possible to rationally design a water composition for brewing coffee, that is not identical to demineralized water and that even consumers that are not used to drinking specialty coffee are able to differentiate. Moreover, it has been shown that coffee brewed on DesignW is preferred to coffee brewed on demineralized water, especially by drinkers of low-to-mid end coffee.

### References

1. The Craft and Science of Coffee, 2017, pages 381-398
2. Water for Coffee: Science, Story, Manual. (2015) by Maxwell Colonna-Dashwood and Christopher Hendon.
3. Discrimination Testing in Sensory Science. A Practical Handbook. Woodhead Publishing Series in Food Science, Technology and Nutrition 2017, Pages 31-65.
4. Sensory Evaluation Techniques 4th edition by Morten C. Meilgaard, Gail Vance Civille and B. Thomas Carr. Chapter 17.
5. H. Lawless and H. Heymann, Sensory Evaluation of Food - Principles and Practices, 2010.

## Claims

1. Use of an aqueous composition for preparing a beverage, wherein the composition has a pH in the range of 7.5 to 7.8, and is further **characterized by** comprising
a) a bicarbonate content in the range of 145 to 170 mg/L;
b) a content of each of calcium and magnesium of less than 25 mg/L; and
c) a dihydrogen phosphate content in the range of 30 to 80 mg/L.

2. The use according to the preceding claim, wherein the aqueous composition is produced from demineralized water.

3. The use according to any one of the preceding claims, wherein the bicarbonate content is 150 to 170 mg/L.

4. The use according to any one of the preceding claims, wherein the source of bicarbonate is sodium bicarbonate (NaHCO₃) or a hydrate thereof, and wherein the source of dihydrogen phosphate is sodium dihydrogen phosphate (NaH₂PO₄) or a hydrate thereof.

5. The use according to any one of the preceding claims, wherein the composition comprises dihydrogen phosphate in the range 50 to 60 mg/L.

6. The use according to any one of the preceding claims, wherein the calcium content is below 10 mg/L, optionally further wherein the magnesium content is below 10 mg/L.

7. The use according to any one of the preceding claims, wherein the composition comprises 165 (±5) mg/L bicarbonate, and 55 (±1) mg/L dihydrogen phosphate.

8. The use according to any one of claims 1 to 7, wherein the beverage is in the form of coffee or tea.

9. A method for brewing coffee by extraction, the method comprising the steps of:
a) providing a demineralized water composition;
b) adding to the composition of a), two or more pH adjusters, wherein at least one of the two or more pH adjusters is also a source of bicarbonate, and wherein at least one other of the two or more pH adjusters is also a source of dihydrogen phosphate, so as to achieve a concentration of bicarbonate in the range of 145 to 170 mg/L, a concentration of dihydrogen phosphate content in the range of 30 to 80 mg/L and pH in the range of 7.5 to 7.8;
c) contacting ground coffee beans with the water composition of b) to perform an extraction; and
d) collecting the aqueous extract,
wherein the water composition of b) comprises less than 25 mg/L of each of calcium and magnesium

10. The method according to claim 9, wherein the source of bicarbonate is sodium bicarbonate (NaHCO₃) or hydrates thereof and wherein the source of dihydrogen phosphate is sodium dihydrogen phosphate (NaH₂PO₄) or a hydrate thereof.

11. The method according to any one of claims 9 to 10, wherein step c) comprises use of a coffee brewing apparatus, selected from the group consisting of French press, aeropress, espresso machine, drip coffee machine, single serve pod coffee machine, and any other apparatus for brewing coffee, wherein in step c) the temperature of the water composition is between 5°C and 98°C when starting the extraction, optionally wherein in step c) the temperature of the water composition is between 90°C and 98°C when starting the extraction.

12. The method according to any one of claims 9 to 11, wherein the ratio of ground beans to aqueous composition ranges from 1:1 to 1:25 by weight, such as from 1:1 to 1:2 by weight, such as from 1:2 to 1:4 by weight, such as from 1:4 to 1:10 by weight, such as from 1:10 to 1:25 by weight, such as from 1:10 to 1:15 by weight, such as from 1:15 to 1:20 by weight, such as from 1:20 to 1:25 by weight.

13. The method according to any one of claims 9 to 12, wherein the extraction in step c) is performed in the range of 2 to 6 minutes, such as in the range of 3 to 5 minutes, such as in the range of 3.5 to 4.5 minutes.

14. The method according to any one of claims 9 to 13, wherein the calcium content is below 10 mg/L, optionally further wherein the magnesium content is below 10 mg/L

## Patentansprüche

1. Verwendung einer wässrigen Zusammensetzung zur Zubereitung eines Getränks, wobei die Zusammensetzung einen pH-Wert im Bereich von 7,5 bis 7,8 aufweist und ferner **dadurch gekennzeichnet ist, dass** sie Folgendes umfasst:
a) einen Bicarbonatgehalt im Bereich von 145 bis 170 mg/l;
b) einen Gehalt an Calcium und Magnesium von jeweils weniger als 25 mg/l und
c) einen Dihydrogenphosphatgehalt im Bereich von 30 bis 80 mg/l.

2. Verwendung nach dem vorhergehenden Anspruch, wobei die wässrige Zusammensetzung aus entmineralisiertem Wasser hergestellt ist.

3. Verwendung nach einem der vorhergehenden Ansprüche, wobei der Bicarbonatgehalt 150 bis 170 mg/l ist.

4. Verwendung nach einem der vorhergehenden Ansprüche, wobei die Bicarbonatquelle Natriumbicarbonat (NaHCO₃) oder ein Hydrat davon ist, und wobei die Dihydrogenphosphatquelle Natriumdihydrogenphosphat (NaH₂PO₄) oder ein Hydrat davon ist.

5. Verwendung nach einem der vorhergehenden Ansprüche, wobei die Zusammensetzung Dihydrogenphosphat im Bereich von 50 bis 60 mg/l umfasst.

6. Verwendung nach einem der vorhergehenden Ansprüche, wobei der Calciumgehalt unter 10 mg/l ist, wobei der Magnesiumgehalt ferner optional unter 10 mg/l ist.

7. Verwendung nach einem der vorhergehenden Ansprüche, wobei die Zusammensetzung 165 (±5) mg/l Bicarbonat und 55 (±1) mg/l Dihydrogenphosphat umfasst.

8. Verwendung nach einem der Ansprüche 1 bis 7, wobei das Getränk in Form von Kaffee oder Tee ist.

9. Verfahren zum Brühen von Kaffee durch Extraktion, wobei das Verfahren die folgenden Schritte umfasst:
a) Bereitstellen einer entmineralisierten Wasserzusammensetzung;
b) Zugeben zu der Zusammensetzung aus a) von zwei oder mehr pH-Regulatoren, wobei mindestens einer der zwei oder mehr pH-Regulatoren auch eine Bicarbonatquelle ist, und wobei mindestens ein anderer der zwei oder mehr pH-Regulatoren auch eine Dihydrogenphosphatquelle ist, sodass eine Bicarbonatkonzentration im Bereich von 145 bis 170 mg/l, eine Dihydrogenphosphatgehaltkonzentration im Bereich von 30 bis 80 mg/l und ein pH-Wert im Bereich von 7,5 bis 7,8 erzielt werden;
c) Inkontaktbringen gemahlener Kaffeebohnen mit der Wasserzusammensetzung aus b), um eine Extraktion durchzuführen, und
d) Sammeln des wässrigen Extrakts,
wobei die Wasserzusammensetzung aus b) jeweils weniger als 25 mg/l Calcium und Magnesium umfasst.

10. Verfahren nach Anspruch 9, wobei die Bicarbonatquelle Natriumbicarbonat (NaHCO₃) oder Hydrate davon ist, und wobei die Dihydrogenphosphatquelle Natriumdihydrogenphosphat (NaH₂PO₄) oder ein Hydrat davon ist.

11. Verfahren nach einem der Ansprüche 9 bis 10, wobei Schritt c) eine Verwendung einer Kaffeebrühvorrichtung umfasst, ausgewählt aus der Gruppe, bestehend aus einer Pressstempelkanne, Aeropress, Espressomaschine, Filterkaffeemaschine, Einzelportionskapsel-Kaffeemaschine und jeder beliebigen anderen Vorrichtung zum Brühen von Kaffee, wobei in Schritt c) die Temperatur der Wasserzusammensetzung zwischen 5 °C und 98 °C ist, wenn die Extraktion gestartet wird, wobei in Schritt c) die Temperatur der Wasserzusammensetzung optional zwischen 90 °C und 98 °C ist, wenn die Extraktion gestartet wird.

12. Verfahren nach einem der Ansprüche 9 bis 11, wobei das Verhältnis von gemahlenen Bohnen zu wässriger Zusammensetzung von 1:1 bis 1:25 nach Gewicht, wie von 1:1 bis 1:2 nach Gewicht, wie von 1:2 bis 1:4 nach Gewicht, wie von 1:4 bis 1:10 nach Gewicht, wie von 1:10 bis 1:25 nach Gewicht, wie von 1:10 bis 1:15 nach Gewicht, wie von 1:15 bis 1:20 nach Gewicht, wie von 1:20 bis 1:25 nach Gewicht beträgt.

13. Verfahren nach einem der Ansprüche 9 bis 12, wobei die Extraktion in Schritt c) im Bereich von 2 bis 6 Minuten, wie im Bereich von 3 bis 5 Minuten, wie im Bereich von 3,5 bis 4,5 Minuten, durchgeführt wird.

14. Verfahren nach einem der Ansprüche 9 bis 13, wobei der Calciumgehalt unter 10 mg/l ist, wobei der Magnesiumgehalt ferner optional unter 10 mg/l ist.

## Revendications

1. Utilisation d'une composition aqueuse pour la préparation d'une boisson, dans laquelle la composition a un pH compris dans la plage de 7,5 à 7,8, et est également **caractérisée en ce qu'**elle comprend
a) une teneur en bicarbonate comprise dans la plage de 145 à 170 mg/l ;
b) une teneur en chacun du calcium et du magnésium inférieure à 25 mg/l ; et
c) une teneur en dihydrogénophosphate comprise dans la plage de 30 à 80 mg/l.

2. Utilisation selon la revendication précédente, dans laquelle la composition aqueuse est produite à partir d'eau déminéralisée.

3. Utilisation selon l'une quelconque des revendications précédentes, dans laquelle la teneur en bicarbonate est de 150 à 170 mg/l.

4. Utilisation selon l'une quelconque des revendications précédentes, dans laquelle la source de bicarbonate est le bicarbonate de sodium (NaHCO₃) ou un hydrate de celui-ci, et dans laquelle la source de dihydrogénophosphate est le dihydrogénophosphate de sodium (NaH₂PO₄) ou un hydrate de celui-ci.

5. Utilisation selon l'une quelconque des revendications précédentes, dans laquelle la composition comprend du dihydrogénophosphate dans la plage de 50 à 60 mg/l.

6. Utilisation selon l'une quelconque des revendications précédentes, dans laquelle la teneur en calcium est inférieure à 10 mg/l, éventuellement également dans laquelle la teneur en magnésium est inférieure à 10 mg/l.

7. Utilisation selon l'une quelconque des revendications précédentes, dans laquelle la composition comprend 165 (±5) mg/l de bicarbonate et 55 (±1) mg/l de dihydrogénophosphate.

8. Utilisation selon l'une quelconque des revendications 1 à 7, dans laquelle la boisson est sous forme de café ou de thé.

9. Procédé d'infusion de café par extraction, le procédé comprenant les étapes de :
a) fourniture d'une composition d'eau déminéralisée ;
b) ajout à la composition de a), deux ajusteurs de pH ou plus, dans lequel au moins l'un des deux ajusteurs de pH ou plus est également une source de bicarbonate, et dans lequel au moins un autre des deux ajusteurs de pH ou plus est également une source de dihydrogénophosphate, de manière à obtenir une concentration de bicarbonate comprise dans la plage de 145 à 170 mg/l, une concentration de dihydrogénophosphate comprise dans la plage de 30 à 80 mg/l et un pH compris dans la plage de 7,5 à 7,8 ;
c) mise en contact de grains de café moulus avec la composition aqueuse de b) pour effectuer une extraction ; et
d) collecte de l'extrait aqueux,
dans lequel la composition d'eau de b) comprend moins de 25 mg/l de calcium et de magnésium.

10. Procédé selon la revendication 9, dans lequel la source de bicarbonate est le bicarbonate de sodium (NaHCO₃) ou des hydrates de celui-ci et dans lequel la source de dihydrogénophosphate est le dihydrogénophosphate de sodium (NaH₂PO₄) ou un hydrate de celui-ci.

11. Procédé selon l'une quelconque des revendications 9 et 10, dans lequel l'étape c) comprend l'utilisation d'un appareil d'infusion de café, choisi dans le groupe constitué d'une cafetière à piston, d'un AeroPress, d'une machine à expresso, d'une cafetière à filtre, d'une machine à café à dosettes individuelles et de tout autre appareil d'infusion de café, dans lequel à l'étape c) la température de la composition d'eau est comprise entre 5 °C et 98 °C au démarrage de l'extraction, éventuellement dans lequel à l'étape c) la température de la composition d'eau est comprise entre 90 °C et 98 °C au démarrage de l'extraction.

12. Procédé selon l'une quelconque des revendications 9 à 11, dans lequel le rapport des grains moulus à la composition aqueuse varie de 1:1 à 1:25 en poids, tel que de 1:1 à 1:2 en poids, tel que de 1:2 à 1:4 en poids, tel que de 1:4 à 1:10 en poids, tel que de 1:10 à 1:25 en poids, tel que de 1:10 à 1:15 en poids, tel que de 1:15 à 1:20 en poids, tel que de 1:20 à 1:25 en poids.

13. Procédé selon l'une quelconque des revendications 9 à 12, dans lequel l'extraction à l'étape c) est effectuée dans la plage de 2 à 6 minutes, telle que dans la plage de 3 à 5 minutes, telle que dans la plage de 3,5 à 4,5 minutes.

14. Procédé selon l'une quelconque des revendications 9 à 13, dans lequel la teneur en calcium est inférieure à 10 mg/l, éventuellement également dans lequel la teneur en magnésium est inférieure à 10 mg/l.
